# EUROPÄISCHE PATENTSCHRIFT

(11) **EP 0 420 945 B1**
(45) Veröffentlichungstag und Bekanntmachung des Hinweises auf die Patenterteilung: **27.10.1993**
(21) Anmeldenummer: 89912389.7
(22) Anmeldetag: 21.11.1989
(51) Int. Cl.: F16M 11/14, F16C 11/10

(54) **GELENKSTATIV**
ARTICULATED STAND
SUPPORT ARTICULE

(30) Priorität: 09.12.1988 CH 4568/88
(43) Veröffentlichungstag der Anmeldung: 10.04.1991
(73) Patentinhaber: TEKUSA AG, CH-8953 Dietikon (CH)
(72) Erfinder: MEIER, Daniel, CH-8953 Dietikon (CH)
(74) Vertreter: Lüthy, Thomas
(86) Internationale Anmeldenummer: CH8900205
(87) Internationale Veröffentlichungsnummer: WO9006471

(56) Entgegenhaltungen:
- CH-A- 608 874
- DE-A- 3 104 353
- DE-A- 3 206 789
- FR-A- 458 112
- US-A- 3 278 207
- US-A- 4 491 435

## Beschreibung

Die vorliegende Erfindung betrifft ein Gelenkstativ, das insbesondere zum Tragen von Messuhren verwendet wird. Es kann jedoch auch für beliebige andere Zwecke benützt werden, wo immer auch ein Objekt an einem bestimmten Ort in einer bestimmten Lage festgehalten werden muss. Es sind bereits verschiedene Gelenkstative für diese Zwecke bekannt. Im wesentlichen bestehen sie aus zwei über ein zentrales Gelenk zueinander verschwenkbaren und in jeder Lage feststellbaren Gelenkarmen. Die Gelenkarme tragen an ihren Enden Kugelgelenke, deren Kugeln mit einem Bolzen versehen sind, welcher dann in den durch das Kugelgelenk gegebenen Freiheitsgraden beliebig dreh- und schwenkbar ist. Der eine Bolzen wird dann zum Beispiel fest an einen Fuss montiert, während der andere das festzuhaltende Objekt trägt. Das Gelenkstativ weist im übrigen Mittel auf, um sowohl das zentrale Schwenkgelenk zwischen den zwei Gelenkarmen wie auch die Kugelgelenke fest zu verspannen. Im speziellen gibt es solche Verspannungsmittel, welche durch einen einzigen Handgriff betätigbar sind, so dass alle Gelenke des Stativs zugleich verspannt werden. Derartige Gelenkstative werden ganz allgemein zum Festhalten irgendwelcher Objekte benützt, zum Beispiel zum Festhalten von zu verlötenden zu verleimenden oder zu verschweissenden Teilen. Durch leichtes Lösen des Verspannungsmechanismus lassen sich alle Gelenke mit gleicher Kraft bewegen, was zum Anpassen einer gewünschten Objektlage hilfreich ist. An Messuhrenstationen hingegen ist es erwünscht, dass die Gelenke in einer bestimmten Reihenfolge verspannt werden, was durch eine besondere Auslegung der Verspannungsmittel erreicht wird. Meistens schliessen die bekannten Verspannungsmittel auf der Schwenkachse der beiden Gelenkarme axial verschiebbar gelagerte Elemente mit geneigten Auflaufflächen ein, die kraft eines auf dem Schwenkbolzen angeordneten Handgriffs mittels einer Gewindeverbindung zu mindestens einem dieser mit einer konischen Fläche versehenen Elemente zueinander bewegbar sind. Die konischen Schrägflächen oder Auflaufflächen beaufschlagen dann mittel- oder unmittelbar in den Gelenkarmen längsverschiebbar gelagerte Schubstangen, welche schliesslich die Kugeln in den Kugelgelenken mit jenen verspannen. Beim Festziehen des Handgriffs werden zudem auch die beiden Gelenkarme aufeinander gedrückt und gegenseitig verspannt.

Aus der CH-A-608'874 ist ein Dreigelenk-Stativ bekannt, bei dem eine ähnliche Wirkung wie mit konischen Elementen mittels Spannhülsen erzielt wird, in welche je eine senkrecht zur Hülsenachse verlaufende Nut eingefräst ist. Jene Nut wirkt gewissermassen als Konus, indem sie als Widerlager für einen Kniehebel dient, welcher mit seinem anderen Ende an der Schubstange anliegt. Werden die Spannhülsen gegeneinander bewegt, so werden die Kniehebel in den Widerlagern leicht geschwenkt und drücken dadurch auf die Schubstangenenden. Je länger dabei die Kniehebel sind, umso grösser ist deren Kraftübersetzung und umso kleiner der erzielbare Verschiebeweg der Schubstangen. In einem anderen bekannten Gelenkstativ werden anstelle von Kniehebeln Kugeln verwenden, wobei dann die konischen Elemente Spannhülsen mit geneigten Auflaufflächen sind, die durch konisch gefräste Nuten sphärischen Querschnitts gebildet sind.

Ziel all dieser Gelenkstativ-Konstruktionen ist es natürlich, bei möglichst einfachem und leichtem Aufbau die grösstmögliche Präzision und Spannkraft zu erreichen. Das Gelenkstativ sollte nämlich so stabil gebaut und konstruiert sein, dass es möglichst hohe, an den Gelenkarmenden auftretende Kräfte ohne Veränderung deren Lage absorbieren kann. Damit das Gelenkstativ, welches ja über einen einzigen Handgriff verspannt wird, speziell als Messuhrenstativ bedienerfreundlich zu handhaben ist, sollte die Verspannung der einzelnen Gelenke an einem solchen Messuhrenstativ, wie schon erwähnt, nicht genau gleichzeitig erfolgen. Ist dieses nämlich der Fall, so fällt das verspannte Gelenkstativ beim Lösen der Verspannung plötzlich gänzlich in sich zusammen. Hingegen ist es bei der Installation als Messuhrenstativ hilfreich, wenn beim Verspannen zuerst das als Fuss des Gelenkstatives wirkende Kugelgelenk verspannt wird, dann das zentrale Schwenkgelenk und schliesslich das Kugelgelenk, welches mittels einer Messuhrhalterung beziehungsweise Feineinstellvorrichtung die Messuhr trägt. Funktioniert das Gelenkstativ derart, so werden nach und nach die Freiheitsgrade der Bewegung des zu tragenden Messinstrumentes eingeschränkt und zusätzlich wird schon eine gewisse Stabilisierung desselben gewährleistet. So kann entsprechend von einer Grob-Positionierung schrittweise zu einer Feineinstellung der Lage des Messinstrumentes fortgeschritten werden. An herkömmlichen Gelenkstativen wird diese aufeinanderfolgende Verspannung der einzelnen Gelenke dadurch erzielt, dass Druckfedern verschiedener Stärke in geeigneter Weise den einzelnen Uebertragungselementen der Verspannung zwischengeschaltet werden. Die herkömmlichen Gelenkstative sind aus einer beträchtlichen Anzahl von Einzelteilen aufgebaut. Dieses macht ihre Fabrikation teuer und falls es sich bei den Einzelteilen um bewegliche handelt, verursachen diese je eine entsprechende Toleranz in deren Bewegung. Ueberall, wo zwei bewegliche Teile aneinander anliegen, entsteht ein Uebergangspunkt, wo ein entsprechendes Spiel möglich ist. Jedes mögliche spiel aber vergrössert letztendlich die Toleranz und hat am getragenen Messinstrument entsprechend relativ unstabile Messverhältnisse zur Folge.

Es ist deshalb die Aufgabe der vorliegenden Erfindung, ein Gelenkstativ der obenerwähnten Art zu schaffen, welches mit einem Minimum an Uebertragungspunkten auskommt, aus möglichst wenigen Einzelteilen aufgebaut ist und eine möglichst grosse Spannkraft zu erzeugen vermag.

Diese Aufgabe löst ein Gelenkstativ, insbesondere für Fühlhebelmessuhren, mit zwei über ein zentrales Gelenk gegeneinander schwenkbar verbundenen Gelenkarmen, die je an ihrem Ende ein Kugelgelenk mit einer frei dreh- und schwenkbaren Kugel tragen, und mit in den Gelenkarmen untergebrachten Spannmitteln zur festen Verspannung des zentralen Gelenkes und der Kugelgelenke, welche Spannmittel über einen einzigen, am zentralen Gelenk angeordneten Handgriff betätigbar sind, das sich dadurch auszeichnet, dass mindestens eine Kugel der Kugelgelenke jeweils mit ihrer dem Gelenkarm zugewandten Seite direkt an einer mit dem Gelenkarm fest verbundenen Abstützfläche anliegt.

Anhand der Zeichnungen werden beispielsweise Ausführungen des erfindungsgemässen Gelenkstatives gezeigt und in der nachfolgenden Beschreibung im einzelnen erläutert.

Es zeigt:
- Figur 1 :: eine perspektivische Explosionszeichnung des Gelenkstatives;
- Figur 2 :: einen Schnitt längs der Gelenkarmachsen durch das ganze Gelenkstativ;
- Figur 3 :: einen Ausschnitt aus Figur 2 mit eingezeichnetem Kraftverlauf;
- Figur 4 :: eine Variante des zentralen Schwenkgelenkes mit Widerlagern in den Spannhülsen im Schnitt.

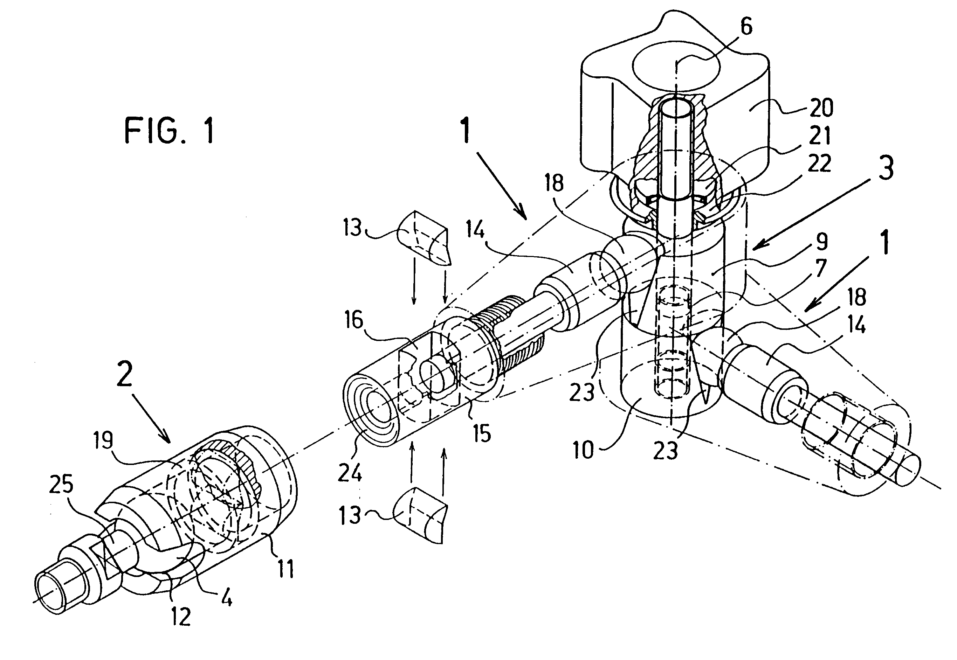

In Figur 1 ist ein erfindungsgemasses Gelenkstativ so dargestellt, dass alle seine Bestandteile gut ersichtlich sind. Es sind zwei Gelenkarme 1 vorhanden, die beide drehbar um eine gemeinsame Achse 6 gelagert sind, wobei die Achse 6 von einem Spannbolzen 7 gebildet wird, welcher beide Gelenkarme 1 durchsetzt und ein zentrales Schwenkgelenk 3 bildet. An beiden Enden der Gelenkarme 1, obwohl in Figur 1 bloss eines gezeigt ist, ist ein Kugelgelenk 2 angeordnet. Die Gelenkarme 1 weisen beide eine Durchgangsbohrung auf, die einem beträchtlich grösseren Durchmesser als der Spannbolzen 7 hat. In diesen Bohrungen sind Spannhülsen 9,10 geführt, welche ihrerseits auf dem Spannbolzen 7 axial verschiebbar gelagert sind. Die eine Spannhülse 9 sitzt dabei frei verschiebbar auf dem Spannbolzen 7, während die andere Spannhülse 10 auf dem Spannbolzen 7 gewindegelagert ist. Die Spannhülse 9 ragt sowohl in den einen wie den anderen Gelenkarm 1, sitzt also stets in beiden Bohrungen gleichzeitig. Damit wirkt sie als eigentlicher Lagerbolzen für das zentrale Gelenk 3, mittels dem die beiden Gelenkarme 1 zueinander verschwenkbar sind. Durch den relativ grossen Durchmesser dieser als Lagerbolzen wirkenden Spannhülse 9 wird eine hohe Präzision und Stabilität des Schwenkgelenkes 3 erzielt. Eine mögliche Verwindungstoleranz wird nämlich umso kleiner, je grösser der Durchmesser des Lagerbolzens ist. Auf dem einen Ende des Spannbolzens 7 sitzt ein Handgriff 20, welcher über ein Gewinde mit dem Spannbolzen 7 fest verbunden und gesichert ist.

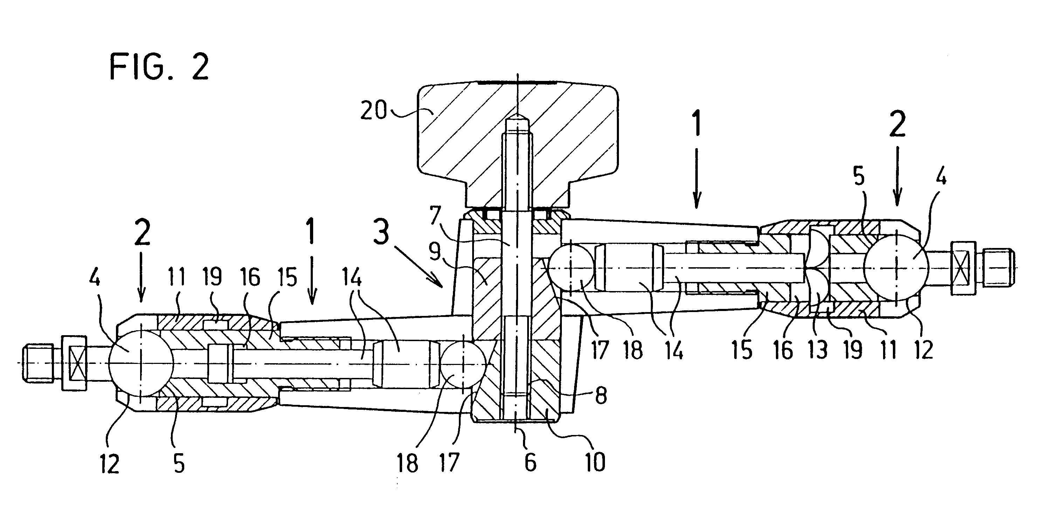

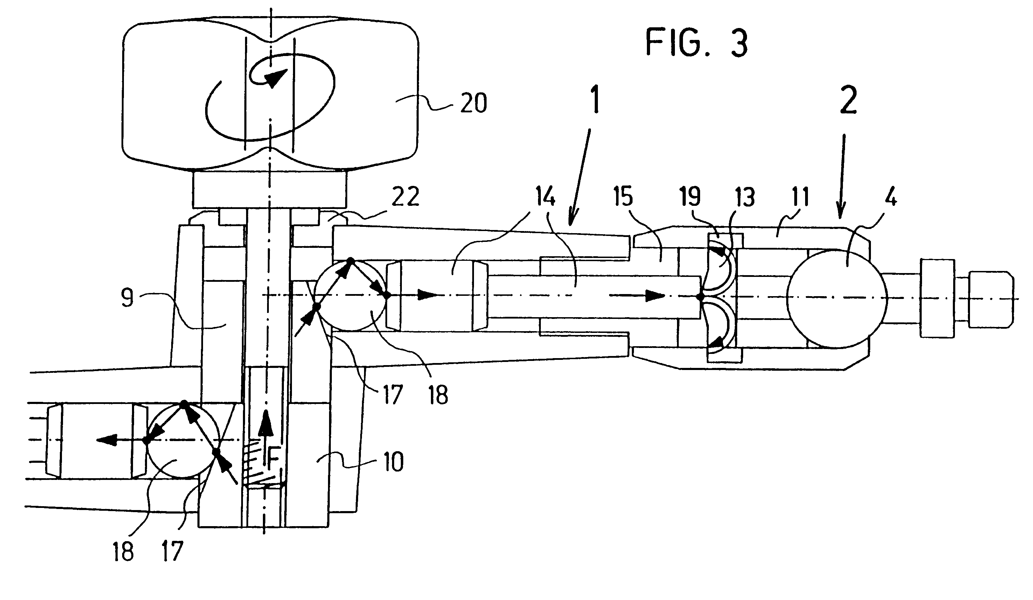

Mit der Drehung des Handgriffs 20 wird also auch der Spannbolzen 7 gedreht. Beim Anziehen des Handgriffs 20 drückt dieser auf ein Axial-Nadellager 21, welches seinerseits auf den Spannring 22 drückt. Durch das Axial-Nadellager 21 wird die auftretende Reibung zwischen Handgriff 20 und Spannring 22 praktisch eliminiert, sodass kein Drehmoment auf den Spannring 22 übertragen wird. Infolge der Gewindeverbindung des Spannbolzens 7 mit der Spannhülse 10 wird diese beim Anziehen des Handgriffes 20 gegen jenen hingezogen. Beide Spannhülsen 9,10 weisen konisch gefräste Rundnuten 23 auf, die als Auflaufflächen für die Kugeln 18 dienen, die präzis in entsprechende Längsbohrungen in den Gelenkarmen 1 einpassen. Die Kugeln 18 liegen dort an den Schubstangen 14 an, die längsverschiebbar in den Längsbohrungen der Gelenkarme 1 geführt sind. Am äusseren Ende der Gelenkarme 1 sind Abstützelemente 15 für die Kugeln 4 der Kugelgelenke 2 fest mit den Gelenkarmen 1 verbunden. Jene Kugelabstützelemente 15 sind im wesentlichen hülsenförmig, wobei die Hülse ein quer zur Hülsenachse verlaufendes Vierkantloch 16 aufweist. In jenem sind zwei Zylindersegemente 13 gehalten, die zur Kraftübertragung der Schubkraft der Schubstangen 14 dienen. Endseitig ist jedes Kugelabstützelement 15 in eine sphärische, konkave Ringfläche 24 ausgebildet, in welche je die Kugel 4 des entsprechenden Kugelgelenkes 2 einpasst. Die Ringfläche 24 dient als eigentliche Kugelabstützfläche. Eine weitere Hülse 11 ist nun über die Kugel 4 und weiter über das Vierkantloch 16 im Kugelabstützelement 15 hinaus über jenes Kugelabstützelement 15 gestülpt. Endseitig ist der Innenrand dieser Hülse 11 in eine sphärische, konkave Ringfläche 12 ausgeformt, in welche die Kugel 4 formschlüssig einpasst. Die Hülse 11 weist in ihrer Innenseite eine Kreisnut 19 auf, auf welche die Ränder der Zylindersegmente 13 wirken, wie das anhand von Figur 2 und 3 noch klar wird. Die Kugeln 4 der Kugelgelenke 2 sind mit einem Bolzen 25 versehen, welcher entweder als Träger des ganzen Gelenkstativs oder auf der anderen Seite als Träger einer Feineinstellvorrichtung zum Festhalten eines Messinstrumentes, zum Beispiel einer Fühlhebel-Messuhr, oder eines beliebigen Werkzeuges oder Objektes dient.

In Figur 2 ist dasselbe Gelenkstativ wie in Figur 1 dargestellt, jedoch zusammengebaut und in einem Schnitt längs der Gelenkarmachsen, wobei die Gelenkarme 1 in einem Winkel von 180° zueinander gespreizt sind. Die Gelenkarme 1 sind je aus einem einstückigen Hohlchassis aufgebaut.

Dieses ermöglicht eine besonders elegante und einfache Konstruktion, weil jedes Hohlchassis als tragendes Teil für sämtliche weiteren, festen oder beweglichen Bestandteile des Stativs dienen kann. Im vorliegenden Fall ist dieses Hohlchassis von besonders einfacher Gestalt. Es weist bloss zwei Durchgangsbohrungen unterschiedlichen Durchmessers auf, wobei die kleinere Bohrung zur Aufnahme der Schubstangen 14 dient und in die grössere Bohrung mündet, in welcher die Spannhülsen 9,10 geführt sind. Die eine Spannhülse 9 wirkt gleichzeitig als Lagerbolzen für das zentrale Schwenkgelenk 3, wie das hier sehr schön erkennbar ist. Die beiden Spannhülsen 9,10 sind tandemartig angeordnet. Sie bewegen sich also stets gleichzeitig in gleicher Richtung und liegen immer satt aneinander an. Ein automatischer Ausgleich der Spannkräfte an jedem Spanngelenk ist durch diese Anordnung nicht mehr gegeben, wie das der Fall ist, wenn die Spannhülsen relativ zueinander verschoben werden, um die Verspannung aufzubauen. Doch das gleichzeitige Verspannen mit überall genau gleicher Spannkraft erweist sich in der Ausführung als Messuhrenstativ als nicht vordringliches Erfordernis. Hingegen ist wie gesagt an Messuhrenstativen eine Verspannung der einzelnen Gelenke in einer bestimmten Reihenfolge sehr erwünscht. Genau das wird aber mit der Tandemanordnung der Spannhülsen mit einer minimalen Anzahl von Bauteilen realisiert, ohne jedwelche Druckfedern notabene. Wie in der Figur 2 ersichtlich, haben die Spannhülsen 9,10 konische Flächen 17, die an den Kugeln 18 anliegen. Werden die Spannhülsen 9,10 nun in Richtung zum Handgriff 20 hin bewegt, so werden die Kugeln von den konischen Flächen 17 in die Bohrungen in den Gelenkarmen 1 hineingedrückt, wodurch die Spannkraft auf die Schubstangen 14 übertragen wird. Die Schubstangen 14 durchsetzen die Kugelabstützelemente 15 und ragen in das Vierkantloch 16 hinein, welches quer durch jene Kugelabstützelemente 15 verläuft. Die Stirnseite der Schubstangen 14 wirkt auf die periphere Segmentschnittkante zweier Zylindersegemente 13 ein, die in das Vierkantloch 16 eingelegt sind. Die Zylindersegmente 13 bilden je einen Segmentausschnitt aus einem Zylinder, welcher einen Winkel von mehr als 180° einschliesst. Der Zylinderdurchmesser ist dabei grösser als der äussere Radius des Kugelabstützelementes 15. Dadurch überragt der gegenüberliegende periphere Rand der Zylindersegmente 13 das Kugelabstützelement 15. Er ragt dort je in eine Kreisnut 19, welche aus der Innenseite einer Hülse 11 ausgenommen ist, die von aussen her über die Kugel 4 des Kugelgelenkes 2 gestülpt ist. Der Innenrand dieser Hülse 11 ist endseitig sphärisch und konkav ausgebildet, so dass die Hülse 11 dort auf ihrer Innenseite verengt ist und eine Ringfläche 12 gebildet ist, an welcher die Kugel 4 formschlüssig anliegt. Die besagten Zylindersegmente 13 wirken nun bei Beaufschlagung mit Schubkraft durch die Schubstangen 14 wie eine Schaukel, so dass eine entsprechende Schubkraft in umgekehrter Richtung auf die Kreisnut 19 der Hülse 11 wirkt. Das Kugelabstützelement 15 bleibt ja stets fest mit dem Gelenkarm 1 beziehungsweise dessem Hohlchassis verbunden, da es ja mit jenem verschraubt ist. Durch die Schubkraft, welche nun auf die Kreisnut 19 der Hülse 11 wirkt, wird jene gegen den Gelenkarm 1 hin gezogen und drückt dadurch die Kugel 4 an das Kugelabstützelement 15, welches kugelseitig ebenfalls eine sphärische, konkave Ringfläche 5 aufweist, an welche die Kugel formschlüssig gedrückt wird.

Die Figur 3 zeigt den Kraftfluss-Verlauf an einem einzelnen Gelenkarm besonders deutlich. Die ursächliche Spannkraft F, erzeugt durch die Betätigung des Handgriffes 20, zieht die Spannhülse 10 in Richtung gegen den Handgriff 20 hin. Die Reaktionskraft wird vom Spannring 22 auf das Hohlchassis des Gelenkarms 1 abgegeben und wurde hier wie alle anderen Reaktionskräfte nicht eingezeichnet. Die Spannkraft F wird dann, wie das die Pfeile angeben, mittels der konischen Flächen 17 auf die Kugeln 18 weitergeleitet. Mit minimalstem Toleranzspiel geschieht das dann, wenn die Kräfte längs einer möglichst langen Umfangslinie auf der Kugel 18 verteilt werden. Deshalb sind die konischen Flächen 17 vorteilhaft als konisch gefräste Rundnuten ausgebildet, deren Radius demjenigen der Kugel 18 entspricht. Dadurch rollt die Kugel 18 stets auf einer Berührungslinie in der Nut ab. Andrerseits ist die Kugel 18 und die Bohrung im Gelenkarm 1 so dimensioniert, dass die Kugel 18 möglichst exakt in die Bohrung einpasst. Die Reaktionskräfte im Gelenkarm 1 treten dann längs einer Umfangslinie auf, welche sich annähernd um 180° erstreckt. Die Kugel 18 überträgt die Spannkraft weiter auf die Schubstange 14, die ihrerseits auf die peripheren Ränder beziehungsweise Segmentschnittkanten der beiden Zylindersegmente 13 wirkt. Die Reaktionskräfte werden vom Kugelabstützelement 15 aufgebracht, das ja fest mit dem Hohlchassis verbunden ist. Aehnlich einer Schaukel leitet jedes Zylindersegment 13 die Kraft um auf die Hülse 11, indem es mit seinem anderen peripheren Rand auf deren Kreisnut 19 drückt. Dadurch wird schliesslich die Hülse 11 gegen die Kugel 4 hingezogen, wodurch das Kugelgelenk 2 verspannt wird. Mit dieser neuen Art der Verspannung kann das Toleranzspiel am Kugelgelenk im Vergleich zu herkömmlichen Konstruktionen weiter verkleinert werden. Die Lage der Kugel 4 wird stets durch ihr Anliegen an dem starren Kugel - abstützelement 15 definiert, welches ja fest mit dem Hohlchassis des Gelenkarmes 1 verschraubt ist. Das Kugelabstützelement 15 kann dank dieser Konstruktion so dimensioniert werden, dass es die durch die Verspannung in seinem Inneren wirkenden Schub- und Normalkräfte problemlos absorbieren kann. Bei herkömmlichen Konstruktionen wird die Kugel des Kugelgelenkes von der Schubstange mittel - oder unmittelbar grundsätzlich vom Gelenkarm weg an die sie umschliessende Hülse gedrückt. Zwischen der erforderlichen Einschränkung der Toleranz infolge der Elastizität der Hülse und der Minimierung deren Baugrösse beziehungsweise deren Durchmessers besteht ein Zielkonflikt. Bei gegebenem kleinem Durchmesser der Hülse 11 ist das erzielbare Toleranzspiel mit der erfindungsgemässen Konstruktion deutlich reduziert.

Um die Verspannung der einzelnen Gelenke 2,3 für eine Ausführung als Messuhrenstativ in einer definierten Reihenfolge zu bewirken, kann beim erfindungsgemässen Gelenkstativ auf Druckfedern verzichtet werden, wodurch weitere Bauteile entfallen. Die Steuerung der Reihenfolge der einzelnen Verspannungen erfolgt ausschliesslich durch eine geringfügige Variation der Längen der eingebauten Spannhülsen 9,10 und Schubstangen 14. Wird zum Beispiel die Spannhülse 9 etwas verkürzt, in der Grössenordnung von Zehntelmillimetern, so erfolgt die Verspannung des zentralen Scharniergelenkes 3 später als jene des Kugelgelenkes 2, welches ursächlich von der Bewegung der Spannhülse 10 verspannt wird. Durch Verringern der Länge der auf das andere Kugelgelenk wirkenden Schubstange 14 tritt dessen Verspannung im Vergleich zu jener des zentralen Scharniergelenkes 3 verspätet ein.

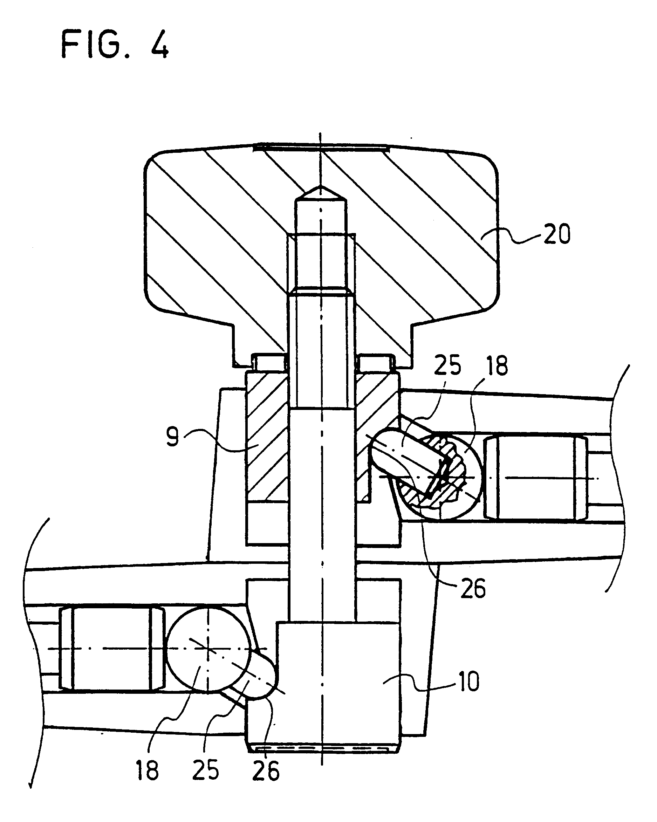

Die Figur 4 zeigt eine alternative Konstruktion des Verspannungsmechanismus an einem erfindungsgemässen Gelenkstativ. Dieser Verspannungsmechanismus ist besonders dann geeignet, wenn allenfalls ein Ausgleich der Spannkräfte an allen Gelenken erzielt werden soll oder die Spannkraft besonders gross sein soll. Die Auflaufflächen an den Spannhülsen 9,10 sind hier quer zur Spannhülsenachse gefräste Nuten, die als Widerlager für in sie hineinpassende Nocken 25 dienen. Die Nocken 25 sind als Bolzen in die Kugeln 18 eingefügt und vergrössern die sonst schon durch die Kugeln bewirkte Kniehebelwirkung auf die Schubstangen 14, indem sie als Kniehebel wirken.

Durch die neuartige Konstruktion des Gelenkstativs werden allgemein weniger Bauteile benötigt. Die Montage respektive Demontage ist bedeutend einfacher, was auch zu einer weniger aufwendigen Fertigung beiträgt. Durch die Verwendung eines festen, geschlossenen Chassis als tragendes und funktionelles Teil jedes Gelenkarmes 1 werden konstruktive und auch ästhetische Vorteile erzielt, kann doch in jedem Chassis der Verspannungsmechanismus von aussen uneinsehbar untergebracht werden. Die besonders gross dimensionierten Spannhülsen 9,10 üben nebst ihrer Funktion beim Verspannen eine Stabilisierungsfunktion aus. Ihre grossen Reibflächen erlauben nämlich eine besonders stabile Verspannung des zentralen Gelenkscharniers 3 der beiden Gelenkarme 1 und gewährleisten damit eine optimale Verdrehsicherheit Weil die eine Spannhülse 9 gar beide Gelenkarme 1 als Lagerbolzen verbindet, wird durch sie auch eine wichtige Zentrierfunktion ausgeübt. Die Grösse dieses Lagerbolzens trägt deshalb nicht nur zur Verdrehsicherheit, sondern auch zur Verwindungsstabilität bei. Auch die gross dimensionierten Kugeln 18 haben eine starke funktionale Wirkung. Sie sind nicht nur besonders reibungsarme Kraftübertragungselemente, sondern wirken ähnlich einem Kniehebel als Kraftübersetzer, indem sie die auf die Kugelgelenke wirkende Spannkraft verstärken. Schliesslich gewährt die permanente Abstützung der Kugeln 4 der Kugelgelenke 2 an den fest mit den Gelenkarmen 1 verbundenen Abstützelementen 15 eine absolut direkte und toleranzfreie Verbindung. Die Kugeln 4 sind dadurch immer spiel- und verwackelungsfrei gehalten.

## Patentansprüche

1. Gelenkstativ, insbesondere für Fühlhebelmessuhren, mit zwei über ein zentrales Gelenk (3) gegeneinander schwenkbar verbundenen Gelenkarmen (1), die je an ihrem Ende ein Kugelgelenk (2) mit einer frei dreh- und schwenkbaren Kugel (4) tragen, und mit in den Gelenkarmen (1) untergebrachten Spannmitteln zur festen Verspannung des zentralen Gelenkes (3) und der Kugelgelenke (2), welche Spannmittel über einen einzigen, am zentralen Gelenk (3) angeordneten Handgriff (20) betätigbar sind, dadurch gekennzeichnet, dass mindestens eine Kugel (4) der Kugelgelenke (2) jeweils mit ihrer dem Gelenkarm zugewandten Seite direkt an einer mit dem Gelenkarm fest verbundenen Abstützfläche (5) anliegt.

2. Gelenkstativ nach Anspruch 1, dadurch gekennzeichnet, dass die Spannmittel zum Verspannen des Kugelgelenkes (2) eine über die Kugel (4) in Richtung gegen den Gelenkarm (1) hin stülpbare Hülse (11) einschliessen, deren einer Innenrand (12) als sphärische Innenfläche ausgebildet ist, welche die Kugel längs eines Ringsegmentes umschliesst, und dass Mittel vorhanden sind, mittels derer die Hülse (11) in Richtung zum Gelenkarm (1) hin spannbar ist.

3. Gelenkstativ nach Anspruch 2, dadurch gekennzeichnet, dass die Mittel zum Verspannen der Hülse (11) Umlenkelemente (13) einschliessen, mittels derer die axial, nach aussen hin wirkende Schubkraft einer im Gelenkarm (1) gelagerten Schubstange (14) in eine um 180° umgelenkte Schubkraft umlenkbar ist, mittels welcher die Hülse (11) gegen den Gelenkarm (1) hin spannbar ist.

4. Gelenkstativ nach Anspruch 3, dadurch gekennzeichnet, dass die Abstützfläche (5) für die Kugel (4) durch ein Kugelabstützelement (15) gebildet ist, welches fest mit dem Gelenkarm (1) verbunden ist und ein Vierkantloch (16) quer zur Längsrichtung des Gelenkarmes (1) aufweist, in welchem Vierkantloch (16) in symmetrischer Anordnung Zylindersegmente (13) als Umlenkelemente (13) gelagert sind, derart, dass deren eine periphere Segmentschnittkante von der Schubstange (14) mit Druck beaufschlagbar ist, wobei jedes Segment (13) mit seiner zylindrischen Wandung auf dem Kugelabstützelement (15) anliegt und die Hülse (11) mittels seiner gegenüberliegenden peripheren Segmentschnittkante mit einer Schubkraft in Richtung zum Gelenkarm (1) hin beaufschlagt ist.

5. Gelenkstativ nach einem der vorhergehenden Ansprüche, dadurch gekennzeichnet, dass die beiden Gelenkarme (1) je aus einem einstückigen Hohlchassis als tragendes Teil aufgebaut sind, das in seinem Innern die Elemente zur Spannkraftübertragung uneinsehbar aufnimmt.

6. Gelenkstativ nach einem der vorhergehenden Ansprüche, dadurch gekennzeichnet, dass die Gelenkarme (1) von einem die Schwenkachse (6) definierenden Spannbolzen (7) mit endseitigem Spanngewinde (8) durchsetzt sind, welcher Spannbolzen (7) zwei aneinander anliegende Spannhülsen (9,10) in Tandemanordnung trägt, wobei die eine Spannhülse (10) eine Gewindehülse ist, die auf dem Gewindeteil (8) des Spannbolzens (7) sitzt, und die andere (9) axial verschiebbar auf dem Spannbolzen (7) zwischen den beiden Gelenkarmen (1) sitzt und als Lagerbolzen zu wirken bestimmt ist.

7. Gelenkstativ nach einem der vorhergehenden Ansprüche dadurch gekennzeichnet, dass die Hülse (11) auf ihrer Innenseite mit einer Kreisnut (19) versehen ist, auf welche die Zylindersegmente (13) mit ihrer einen peripheren Segmentschnittkante zu wirken bestimmt sind.

8. Gelenkstativ nach Anspruch 7, dadurch gekennzeichnet, dass jede Spannhülse (9,10) in gleicher Richtung geneigte, ebene oder zylindrisch gegen innen gewölbte Abrollfächen (17) oder Widerlager (26) aufweist, an welchen Abrollflächen (17) Kugeln (18) anliegen oder welche Widerlager (26) als Gelenkpfannen für an den Kugeln angeformte Nocken (25) dienen, wobei jene Kugeln oder mit Nocken (25) versehenen Kugeln als Uebertragungselemente für die Uebertragung der von den Spannhülsen (9, 10) aufgebrachten Schubkraft auf die Schubstangen (14) zu wirken bestimmt sind.

9. Gelenkstativ nach Anspruch 8, dadurch gekennzeichnet, dass die Kugel (18) satt in eine Bohrung im Gelenkarm (1) einpasst, sodass die vom Gelenkarm auf sie wirkende Reaktionskraft sich auf eine die Kugel (18) um 180° umschliessende Mantellinie verteilt.

10. Gelenkstativ nach Anspruch 8 oder 9, dadurch gekennzeichnet, dass die zylindrisch nach innen gewölbten Abrollfächen (17) an den Spannhülsen (9,10) konisch ausgenommene Rundnuten sind, oder die zylindrisch nach innen gewölbten Widerlager (26) an den Spannhülsen (9,10) je durch eine quer zur Spannhülsenachse (6) ausgenommene Nut gebildet sind.

## Claims

1. An articulated stand, in particular for lever gauges, having two articulated arms (1) pivotably connected with each other by means of a central joint (3) and each supporting on its end a ball joint (2) with a free rotable and pivotable ball (4) and having clamping means inside the articulated arms (1) for the rigid clamping of the central joint (3) and the ball joints (2) which can be activated by means of a single handle (20) at the central joint (3), characterized in that at least one ball (4) of the ball joints (2) adjoins, on the side of the articulated arm, a support surface (5) which is fixed in respect to the articulated arm.

2. An articulated stand in accordance with claim 1, characterized in that the clamping the ball joint (2) include a sleeve (11), which can be inverted over the ball (4) in the direction toward the articulated arm (1), the one inner edge (12) of which is in the form of a spherical inner surface enclosing the ball along an annular segment, and in that means are provided by which the sleeve (11) can be clamped in the direction toward the articulated arm (1).

3. An articulated stand in accordance with claim 2, characterized in that the means for clamping the sleeve (11) include deflection means (13) through which it is possible to change the axial pushing force, acting towards the outside, of a pushrod (14) seated in the articulated arm (1) into a pushing force reversed by 180°, by means of which the sleeve (11) can be clamped in respect to the articulated arm (1).

4. An articulated stand in accordance with claim 3, characterized in that the support surface (5) for the ball (4) is formed by a ball support element (15), which is fixedly connect with the articulated arm (1) and has a square hole (16) crosswise to the longitudinal direction of the articulated arm (1), in which square hole (16) cylinder segments (13) are seated in a symmetrical arrangement to form deflection means (13) such, that one of their peripheral segmental intersecting edges can be acted upon with pressure by the pushrod (14), each segment (13) abutting with its cylindrical wall on the ball support element (15), and the sleeve (11) being acted upon with a pushing force in the direction towards the articulated arm (1) by means of its opposite peripheral segmental intersecting edge.

5. An articulated stand in accordance with one of the preceding claims characterized in that the two articulated arms (1) are each constructed from a one-piece hollow body as the supporting element, which contains in its interior the elements for the transmission of the pushing force so they cannot be seen.

6. An articulated stand in accordance with one of the preceding claims, characterized in that a tension rod (7) with a clamping screw thread (8) on its end and defining the pivot axis (6) extends through the articulated arms (1), which tension rod (7) supports two clamping sleeves (9, 10) placed in tandem against each other, the clamping sleeve (10) being a threaded sleeve seated on the screw thread (8) of the tension rod (7), and the other (9) is displaceably seated on the tension rod (7) between the two articulated arms (1) and is intended to act as bearing bolt.

7. An articulated stand in accordance with one of the preceding claims; characterized in that the sleeve (11) is provided on its inside with an annnlar groove (19) on which the cylinder segments (13) are intended to act with one of their peripheral segmental intersecting edges.

8. An articulated stand in accordance with claim 7, characterized in that each clamping sleeve (9, 10) has plane or inwardly cylindrically arced roll-off surfaces (17) or abutments (26), on which roll-off surfaces (17) abut balls (18) or which abutments (26) are used as hinge points for cams (25) formed on the balls, said balls or said balls provided with cams (25) being intended to act as transmission elements for the transmission to the pushrods (14) of the pushing force provided by the clamping sleeves (9, 10).

9. An articulated stand in accordance with claim 8, characterized in that the ball (18) closely fits into a bore in the articulated arm (1), so that the reaction fprce acting on it from the articulated arm is distributed on a generating line enclosing the ball (18) over 180°.

10. An articulated stand in accordance with claim 8 or 9, characterized in that the inwardly cylindrically arced roll-off surfaces (17) on the clamping sleeves (9, 10) are conically cut-out annular grooves, or that the inwardly cylindrically arced abutments (26) on the clamping sleeves (9, 10) are each formed by a groove cut out crosswise to the clamping sleeve axis (6).

## Revendications

1. Support articulé, en particulier pour des comparateurs munis d'un palpeur à levier, comportant deux bras (1) articulés l'un par rapport à l'autre par l'intermédiaire d'une articulation centrale (3) et portant chacun à leur extrémité un joint à bille (2), dont la bille (4) tourne et pivote librement, les bras articulés (1) contenant des moyens de serrage destinés à fixer l'articulation centrale (3) et les joints à billes (2), ces moyens de serrage pouvant être commandés par une seule manette (20), disposée sur l'articulation centrale (3), caractérisé en ce qu'au moins une bille (4) des joints à bille (2) s'appuie chaque fois, par son côté orienté vers le bras articulé, directement à une surface d'appui (5), fixée au bras articulé.

2. Support articulé suivant la revendication 1, caractérisé en ce que les moyens de serrage pour la fixation de l'articulation à bille (2) comprennent un manchon (11) pouvant passer, dans la direction du bras articulé (1), par dessus la bille (4), un bord intérieur (12) du manchon formant une surface intérieure sphérique, entourant la bille le long d'un élément annulaire, cependant qu'il existe des moyens permettant de serrer le manchon (11) en direction du bras articulé (1).

3. Support articulé suivant la revendication 2, caractérisé en ce que les moyens de fixation du manchon (11) comprennent des éléments de renvoi (13), au moyen desquels la poussée d'une tige de poussée (14) logée dans le bras articulé (1) et agissant axialement vers l'extérieur peut être inversée de 180° en une poussée au moyen de laquelle le manchon (11) peut être serré contre le bras articulé (1).

4. Support articulé suivant la revendication 3, caractérisé en ce que la surface d'appui (5) pour la bille (4) est formée par un élément d'appui de bille (15), qui est fixé au bras articulé (1) et présente un trou carré (16), perpendiculaire à la longueur du bras articulé (1), le trou carré contenant des secteurs cylindriques (13), disposés symétriquement et constituant des éléments de renvoi (13), de sorte qu'une pression peut être exercée par la tige de poussée (14) sur une arête d'intersection périphérique des secteurs, chacun d'eux (13) s'appuyant, par sa paroi cylindrique, sur l'élément d'appui de bille (15) et agissant sur la douille (11) au moyen de son arête d'intersection périphérique opposée, par une poussée en direction du bras articulé (1).

5. Support articulé suivant une des revendications précédentes, caractérisé en ce que les deux bras articulés (1) sont constitués chacun par un châssis creux d'un seul tenant, formant une pièce portante, dont l'intérieur contient de manière invisible les éléments transmettant l'effort de serrage.

6. Support articulé suivant une des revendications précédentes, caractérisé en ce que les bras articulés (1) sont traversés par une tige de serrage (7) définissant l'axe de pivotement (6) et comportant à son extrémité un filetage de serrage (8), cette tige de serrage (7) portant en tandem deux douilles de serrage (9, 10) jointives entre elles, l'une (10) étant une douille filetée, logée sur la partie filetée (8) de la tige de serrage (7), et l'autre (9) étant déplaçable axialement sur la tige de serrage (7) entre les deux bras articulés (1) et agissant comme doigt de palier.

7. Support articulé suivant une des revendications précédentes, caractérisé en ce que le manchon (11) comporte intérieurement une gorge (19), sur laquelle agissent les secteurs cylindriques (13) avec leur arête d'intersection périphérique.

8. Support articulé suivant la revendication 7, caractérisé en ce que chaque douille de serrage (9, 10) comporte des surfaces de roulement (17), qui sont penchées dans le même sens et sont planes ou bombées cylindriquement vers l'intérieur, ou des culées (26), les surfaces de roulement (17) servant d'appui à des billes (18) ou les culées (26) servant de cavité articulaire pour des saillies (25) pratiquées sur les billes, cependant que ces billes, munies ou non de saillies (25), servent d'éléments de transmission pour la transmission de la poussée exercée par les douilles de serrage (9, 10) sur les tiges de poussée (14).

9. Support articulé suivant la revendication 8, caractérisé en ce que la bille (18) se loge sans jeu dans un logement du bras articulé (1), de sorte que la force de réaction du bras agissant sur elle se répartit sur une génératrice enveloppant la bille (18) sur 180°.

10. Support articulé suivant la revendication 8 ou 9, caractérisé en ce que les surfaces de roulement (17) pratiquées sur les douilles de serrage (9, 10) et bombées cylindriquement vers l'intérieur sont des rainures circulaires coniques ou que les culées (26) pratiquées sur les douilles de serrage (9, 10) et bombées cylindriquement vers l'intérieur sont formées chacune par une rainure perpendiculaire à l'axe (6) des douilles de serrage.
